# EUROPEAN PATENT SPECIFICATION

(11) **EP 4 164 019 B1**
(45) Date of publication and mention of the grant of the patent: **24.09.2025**
(21) Application number: 22828588.8
(22) Date of filing: 22.04.2022
(51) Int. Cl.: H01M 10/0567, H01M 10/052, H01M 4/38, H01M 10/0568

(54) **ELECTROLYTE FOR LITHIUM SECONDARY BATTERY AND LITHIUM SECONDARY BATTERY COMPRISING SAME**
ELEKTROLYT FÜR LITHIUMSEKUNDÄRBATTERIE UND LITHIUMSEKUNDÄRBATTERIE DAMIT
ÉLECTROLYTE POUR BATTERIE RECHARGEABLE AU LITHIUM ET BATTERIE RECHARGEABLE AU LITHIUM LE COMPRENANT

(30) Priority: 25.06.2021 KR 20210082887
(43) Date of publication of application: 12.04.2023
(73) Proprietor: LG Energy Solution, Ltd., Seoul 07335 (KR)
(72) Inventor: JUNG, Unho, Daejeon 34122 (KR); LEE, Jaegil, Daejeon 34122 (KR)
(74) Representative: Goddar, Heinz J.
(86) International application number: PCT/KR2022/005798
(87) International publication number: WO 2022/270739

(56) References cited:
- WO-A2-2012/142060
- JP-A- 2005 317 446
- JP-A- 2006 228 602
- JP-A- 2020 013 680
- JP-B2- 6 394 611
- KR-A- 20120 101 414
- KR-A- 20190 131 721
- US-A1- 2002 192 564
- US-A1- 2014 322 616
- US-A1- 2016 308 252
- US-A1- 2020 203 711

## Description

### [Technical Field]

The present invention relates to an electrolyte solution for a lithium secondary battery and a lithium secondary battery comprising the same.

### [Background Art]

As the scope of use of a secondary battery has been expanded from small portable electronic devices to medium and large-sized electric vehicles (EV), energy storage systems (ESS), and electric ships, the demand for a lithium secondary battery with high capacity, high energy density and long lifetime is rapidly increasing.

Since lithium metal theoretically has a very high capacity of 3,860mAh/g, and lithium metal as the negative electrode material has a low potential and has a very small density, there have been a variety of attempts to use it as the negative electrode for the battery.

Among them, the lithium-sulfur secondary battery refers to a battery system in which a sulfur-based material having 'a sulfur-sulfur bond (S-S bond)' is used as a positive electrode active material and lithium metal is used as a negative electrode active material. There is an advantage that sulfur, which is the main material of the positive electrode active material, has a low atomic weight, is very rich in resources and thus is easy to supply and receive, and also is cheap, thereby lowering the manufacturing cost of the battery, and is non-toxic and environmentally friendly.

In particular, since the lithium-sulfur secondary battery has a theoretical discharge capacity of 1,675 mAh/g-sulfur, and can theoretically realize a high energy storage density of 2,600Wh/kg compared to its weight, it has a very high value compared to the theoretical energy density of other battery systems (Ni-MH battery: 450 Wh/kg, Li-FeS battery: 480 Wh/kg, Li-MnO₂ battery: 1,000 Wh/kg, Na-S battery: 800 Wh/kg) and a lithium-ion battery (250 Wh/kg) currently being studied, and thus is receiving great attention in the market of the medium and large-sized secondary batteries that are being developed so far.

Degeneration of the lithium negative electrode is a factor affecting the lifetime of the lithium secondary battery, which may occur due to a reaction with a positive electrode active material or a reaction with an electrolyte solution. As a result, the degradation of the negative electrode has been pointed out as a problem of forming dendrites and lowering Coulombic Efficiency (C.E.). In particular, when the lithium dendrite is formed in a one-dimensional shape, it passes through the separator with pores, thereby generating an internal short circuit of the battery and causing problems of stability and reduced lifetime due to combustion of the electrolyte solution.

Accordingly, in order to improve the problem of the lithium secondary battery due to the dendrite phenomenon, there is a need for research to suppress the formation of dendrites by uniformly depositing (plating) and peeling (stripping) lithium on the surface of the negative electrode.

### [Prior Art Document]

### [Patent Document]

(Patent Document 1) Korean Patent Publication No. 10-2017-0009994 "ELECTROLYTE ADDITIVES FOR LITHIUM-SULFUR BATTERIES"

US 2016/308 252 A1 provides a method for producing a secondary battery in which water in the outer package can be removed even when the secondary battery includes an electrolytic solution containing a halogen-containing compound. The method for producing a secondary battery includes an electrolytic solution containing a supporting salt, a nonaqueous solvent, and a halogen-containing compound, an electrode assembly including a negative electrode and a positive electrode, and an outer package. The method includes (1) disposing a first solution containing at least the supporting salt and the nonaqueous solvent, and the electrode assembly in the outer package; (2) charging the electrode assembly; (3) emitting from the outer package a gas generated by the charge; and (4) injecting a second solution including at least the halogen-containing compound into the outer package after the gas is emitted, wherein the first solution does not contain the halogen-containing compound, and the electrolytic solution includes the first solution and the second solution.

### [Disclosure]

### [Technical Problem]

In order to solve the above problems, the inventors of the present invention intend to provide a lithium secondary battery with improved lifespan and efficiency by adding alkyl trifluoroacetate as an additive to the electrolyte solution for the lithium secondary battery.

### [Technical Solution]

According to a first aspect of the present invention, the present invention provides an electrolyte solution for a lithium secondary battery comprising a lithium salt, an organic solvent and an additive, wherein the additive comprises a compound represented by Formula 1 below: 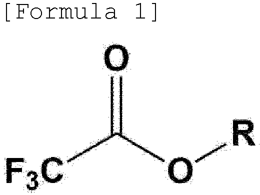
wherein, R is a substituted or unsubstituted C1 to C60 alkyl group,
wherein the electrolyte solution for the lithium secondary battery comprises the compound represented by the above Formula 1 in an amount of 0.01 to 0.8 % by weight relative to the total weight of the electrolyte solution.

In one embodiment of the present invention, R may be selected from the group consisting of a methyl group; an ethyl group; a n-propyl group; an isopropyl group; a n-butyl group; an isobutyl group; a tert-butyl group; a sec-butyl group; a 1-methyl-butyl group; a 1-ethyl-butyl group; a n-pentyl group; an isopentyl group; a neopentyl group; a tert-pentyl group; a n-hexyl group; a 1-methylpentyl group; a 2-methylpentyl group; 4-methyl-2-pentyl group; a 3,3-dimethylbutyl group; and a 2-ethylbutyl group.

In one embodiment of the present invention, the R may be selected from the group consisting of a methyl group; an ethyl group; a n-propyl group; an isopropyl group; a n-butyl group; an isobutyl group; a tert-butyl group; and a sec-butyl group.

In one embodiment of the present invention, the electrolyte solution for the lithium secondary battery may comprise the compound represented by Formula 1 in an amount of 0.01 to 0.4 % by weight relative to the total weight of the electrolyte solution.

In one embodiment of the present invention, the compound represented by Formula 1 is methyl trifluoroacetate, and the electrolyte solution for the lithium secondary battery may comprise the compound represented by Formula 1 in an amount of 0.01 to 0.8 % by weight relative to the total weight of the electrolyte solution.

In one embodiment of the present invention, the compound represented by Formula 1 is methyl trifluoroacetate, and exhibits an 1^{H}-NMR spectrum (300 MHz, CDCl3, standard substance TMS) having a singlet (one peak) in the range of 3.95 ppm to 4.00 ppm.

In one embodiment of the present invention, the compound represented by Formula 1 is ethyl trifluoroacetate, and exhibits an ¹H-NMR spectrum (300 MHz, CDCl₃, standard substance TMS) having a triplet(three peaks) in the range of 1.31 ppm to 1.50 ppm and quartet(four peaks) in the range of 4.25 ppm to 4.55 ppm.

In one embodiment of the present invention, the electrolyte solution for the lithium secondary battery may be an electrolyte solution for a lithium-sulfur battery.

According to a second aspect of the present invention, the present invention provides a lithium secondary battery comprising a positive electrode; a negative electrode; a separator interposed between the positive electrode and the negative electrode; and the electrolyte solution described above.

In one embodiment of the present invention, the lithium secondary battery may be a lithium-sulfur battery.

### [Advantageous Effects]

The lithium secondary battery according to the present invention may have an effect of improving the lifetime characteristics of the lithium secondary battery through the process of efficiently depositing (plating) and peeling (stripping) on the surface of the negative electrode, which is lithium-based metal, to suppress the formation of dendrites, by incorporating alkyl trifluoroacetate as an additive into the electrolyte solution.

In addition, the lithium secondary battery according to the present invention has an effect of suppressing the formation of dendrites by incorporating alkyl trifluoroacetate as an additive into the electrolyte solution, and thus when exposed to lithium in fresh state, forming a protective film (-CF₃ or -F layer), and has an effect of increasing utilization, protecting the lithium negative electrode, and improving the stability of lithium polysulfide by increasing the solubility through chemical interaction with lithium polysulfide generated during discharging.

### [Description of Drawings]

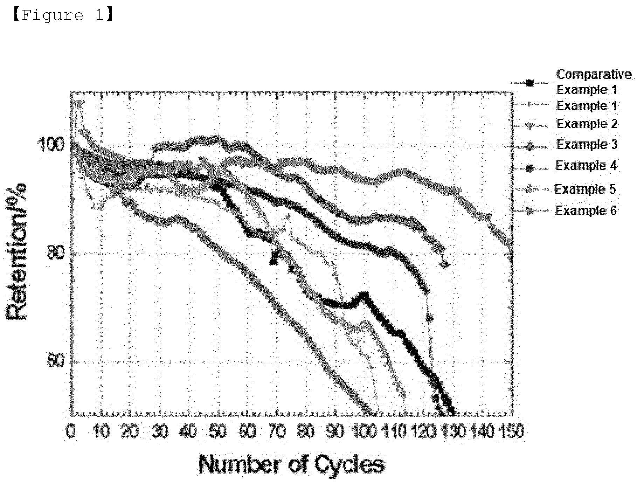

FIG. 1 is a graph showing the results obtained by evaluating the lifetime characteristics of lithium secondary batteries manufactured in Examples and Comparative Examples of the present invention.

### [Best Mode]

The embodiments provided according to the present invention can all be achieved by the following description. It is to be understood that the following description is to be understood as describing preferred embodiments of the present invention and the present invention is not necessarily limited thereto.

The term "substituted" used herein means that hydrogen atoms bonded to the carbon atom of the compound are exchanged with another substituents, and the position to be substituted is not limited as long as the position is a position where a hydrogen atom is substituted, that is, a position where a substituent can be substituted, and if two or more substituents are substituted, two or more substituents may be the same or different from each other.

Any substituents of the term "substituted or unsubstituted" used herein may be one or more substituents selected from the group consisting of deuterium; halogen; a cyano group; an alkyl group having 1 to 60 carbon atoms; an alkenyl group having 2 to 60 carbon atoms; an alkynyl group having 2 to 60 carbon atoms; a cycloalkyl group having 3 to 60 carbon atoms; a heterocycloalkyl group having 2 to 60 carbon atoms; an aryl group having 5 to 60 carbon atoms; a heteroaryl group having 2 to 60 carbon atoms; an alkoxy group having 1 to 60 carbon atoms; an aryloxy group having 5 to 60 carbon atoms; an alkylsilyl group having 1 to 60 carbon atoms; and an arylsilyl group having 6 to 60 carbon atoms, and if the substituents are plural, they may be the same or different from each other.

### Electrolyte solution for lithium secondary battery

The present invention provides an electrolyte solution for a lithium secondary battery comprising a lithium salt, an organic solvent and an additive, wherein the additive comprises a compound represented by Formula 1 below. 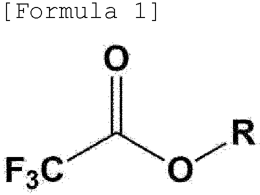 wherein, R is a substituted or unsubstituted C1 to C60 alkyl group,
wherein the electrolyte solution for the lithium secondary battery comprises the compound represented by the above Formula 1 in an amount of 0.01 to 0.8 % by weight relative to the total weight of the electrolyte solution.

By incorporating alkyl trifluoroacetate, which is a compound represented by Formula 1, as an additive to the electrolyte solution for the lithium secondary battery, there may be an effect of improving the lifetime and efficiency characteristics of the lithium secondary battery through the process of chemically stable and uniformly depositing (plating) and peeling (stripping) on the lithium-based metal surface used as the negative electrode.

Specifically, the alkyl trifluoroacetate, which is the compound represented by Formula 1, when exposed to lithium in fresh state during charging and discharging, can form a protective film (-CF₃ or -F Layer) to suppress the formation of dendrites.

The electrolyte solution for the lithium secondary battery of the present invention may preferably be an electrolyte solution for a lithium-sulfur battery. Accordingly, the solubility of the alkyl trifluoroacetate, which is a compound represented by Formula 1, is increased through chemical interaction, for example, nucleophilic reaction or alkylation, with lithium polysulfide generated during discharging of the lithium-sulfur battery, and thus it has the effect of increasing utilization, protecting the lithium negative electrode, and improving the stability of lithium polysulfide.

In the present specification, 'lithium in a fresh state' may be defined as 'pure lithium'.

The R may be a substituted or unsubstituted C1 to C60 alkyl group; a substituted or unsubstituted C1 to C40 alkyl group; a substituted or unsubstituted C1 to C20 alkyl group; a substituted or unsubstituted C1 to C10 alkyl group; or a substituted or unsubstituted C1 to C5 alkyl group.

The R may be selected from the group consisting of a methyl group; an ethyl group; a n-propyl group; an isopropyl group; a n-butyl group; an isobutyl group; a tert-butyl group; a sec-butyl group; a 1-methyl-butyl group; a 1-ethyl-butyl group; a n-pentyl group; an isopentyl group; a neopentyl group; a tert-pentyl group; a n-hexyl group; a 1-methylpentyl group; a 2-methylpentyl group; 4-methyl-2-pentyl group; a 3,3-dimethylbutyl group; and a 2-ethylbutyl group.

The R may be selected from the group consisting of a methyl group; an ethyl group; a n-propyl group; an isopropyl group; a n-butyl group; an isobutyl group; a tert-butyl group; a sec-butyl group; a 1-methyl-butyl group; a 1-ethyl-butyl group; a n-pentyl group; an isopentyl group; a neopentyl group; and a tert-pentyl group.

The R may be selected from the group consisting of a methyl group; an ethyl group; a n-propyl group; an isopropyl group; a n-butyl group; an isobutyl group; a tert-butyl group; and a sec-butyl group.

The R may be selected from the group consisting of a methyl group; an ethyl group; a n-propyl group; and an isopropyl group.

The R may be a methyl group; or an ethyl group.

The compound represented by Formula 1 may be selected from the group consisting of methyl trifluoroacetate, ethyl trifluoroacetate, propyl trifluoroacetate, butyl trifluoroacetate, pentyl trifluoroacetate, hexyl trifluoroacetate and isopropyl trifluoroacetate, preferably may be methyl trifluoroacetate or ethyl trifluoroacetate, and more preferably may be methyl trifluoroacetate.

The electrolyte solution for the lithium secondary battery contains the compound represented by Formula 1 in the amount of 0.01 % by weight or more, preferably, 0.02 % by weight or more, 0.03 % by weight or more, 0.04 % by weight or more, 0.05 % by weight or more, 0.06 % by weight or more, 0.07 % by weight or more, 0.08 % by weight or more, 0.09 % by weight or more, or 0.1 % by weight or more relative to the total weight of the electrolyte solution, and contains the compound represented by Formula 1 in the amount of 0.8 % by weight or less, preferably,0.7 % by weight or less, 0.6 % by weight or less, 0.5 % by weight or less, 0.4 % by weight or less, 0.3 % by weight or less, or 0.2 % by weight or less. If the electrolyte solution for the lithium secondary battery contains less than 0.01 % by weight of the compound represented by Formula 1 relative to the total weight of the electrolyte solution, the amount added is very small, and thus the function intended by adding the alkyl trifluoroacetate additive in order to uniformly cause depositing (plating) and peeling (stripping) of lithium cannot be exhibited, and the effect of increasing the lifetime of the battery may be insignificant. On the other hand, if the electrolyte solution for lithium secondary battery contains the compound represented by Formula 1 in an amount exceeding 0.9 % by weight, relative to the total weight of the electrolyte solution, there may be a problem that the viscosity of the electrolyte solution is increased and the performance of the battery is deteriorated through a chemical reaction with polysulfide.

The compound represented by Formula 1 is methyl trifluoroacetate, and the electrolyte solution for the lithium secondary battery may contain the compound represented by Formula 1 in an amount of 0.01 to 0.9% by weight relative to the total weight of the electrolyte solution.

The compound of Formula 1 may be methyl trifluoroacetate, and exhibits an ¹H-NMR spectrum (300 MHz, CDCl₃, standard substance TMS) having a singlet(one peak) in the range of 3.95 ppm to 4.00 ppm.

The compound of Formula 1 may be ethyl trifluoroacetate, and exhibits an ¹H-NMR spectrum (300 MHz, CDCl₃, standard substance TMS) having a triplet(three peaks) in the range of 1.31 ppm to 1.50 ppm and quartet(four peaks) in the range of 4.25 ppm to 4.55 ppm.

That is, the compound represented by Formula 1 in the present invention may exhibit the above unique peak in the ¹H-NMR spectrum, and through this, it can be confirmed that the compound represented by Formula 1 is contained as an additive in the electrolyte solution for the lithium secondary battery. On the other hand, in the electrolyte solution for the lithium secondary battery, when the compound represented by Formula 1 is not contained, the ¹H-NMR peaks described above cannot appear.

The organic solvent may be selected from the group consisting of linear ether compounds, cyclic ether compounds, and combinations thereof.

The linear ether compound may be selected from the group consisting of dimethyl ether, diethyl ether, dipropyl ether, dibutyl ether, diisobutyl ether, ethyl methyl ether, ethyl propyl ether, ethyl tert-butyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetra-ethylene glycol dimethyl ether, ethylene glycol divinyl ether, diethylene glycol divinyl ether, triethylene glycol divinyl ether, dipropylene glycol dimethylene ether, butylene glycol ether, diethylene glycol ethyl methyl ether, diethylene glycol isopropyl methyl ether, diethylene glycol butyl methyl ether, diethylene glycol tert-butyl ethyl ether, ethylene glycol ethyl methyl ether and combinations thereof.

The cyclic ether compound may be selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, isosorbide dimethyl ether and combinations thereof.

The electrolyte solution for the lithium secondary battery of the present invention may contain a lithium salt. The lithium salt is a substance which can be easily dissolved in an organic solvent, and may be selected from the group consisting of LiCl, LiBr, LiI, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂, lithium chloroborane, lithium lower aliphatic carboxylate, lithium tetraphenyl borate, and lithium imide, and preferably may be LiN(CF₃SO₂)₂(LiTFSI).

The concentration of the lithium salt may be 0.1 to 5.0 M, preferably 0.2 to 3.0 M, more preferably 0.5 to 2.5 M depending on various factors such as the exact composition of the mixture contained in the electrolyte solution, the solubility of the salt, the conductivity of the dissolved salt, the charging and discharging conditions of the battery, the operating temperature, and other factors known in the lithium battery field. If the concentration of the lithium salt is less than 0.1 M, the conductivity of the electrolyte solution may be lowered and thus the performance of the electrolyte solution may be deteriorated. If the concentration of the lithium salt exceeds 5.0 M, the viscosity of the electrolyte solution may increase and thus the mobility of the lithium ion (Li⁺) may be reduced.

The electrolyte solution for the lithium secondary battery of the present invention may further comprise additives commonly used in the art in addition to the above-described components. For example, the additive may be selected from the group consisting of lithium nitrate (LiNO₃), potassium nitrate (KNO₃), cesium nitrate (CsNO₃), magnesium nitrate (Mg(NO₃)₂), barium nitrate (Ba(NO₃)₂), lithium nitrite (LiNO₂), potassium nitrite (KNO₂), cesium nitrite (CsNO₂) and combinations thereof.

The method for preparing the electrolyte solution for the lithium secondary battery according to the present invention is not particularly limited in the present invention, and may be prepared by a conventional method known in the art.

### Lithium secondary battery

The lithium secondary battery comprises a positive electrode; a negative electrode; a separator interposed between the positive electrode and the negative electrode; and an electrolyte solution, wherein the electrolyte solution comprises the electrolyte solution for the lithium secondary battery according to the present invention.

The positive electrode may comprise a positive electrode current collector and a positive electrode active material coated on one or both sides of the positive electrode current collector.

The positive electrode current collector supports the positive electrode active material and is not particularly limited as long as it has high conductivity without causing chemical changes in the battery. For example, copper, stainless steel, aluminum, nickel, titanium, palladium, sintered carbon; copper or stainless steel surface-treated with carbon, nickel, silver or the like; aluminum-cadmium alloy or the like may be used as the positive electrode current collector.

The positive electrode current collector can enhance the bonding strength with the positive electrode active material by having fine irregularities on its surface, and may be formed in various forms such as film, sheet, foil, mesh, net, porous body, foam, or nonwoven fabric.

The positive electrode active material layer may include a positive electrode active material, a binder, and an electrically conductive material.

A lithium-containing transition metal oxide may be used as the positive electrode active material, and for example, any one selected from the group consisting of LiCoO₂, LiNiO₂, LiMnO₂, LiMn₂O₄, Li (NiₐCo_{b}Mn_{c})O₂(0<a<1, 0<b<1, 0<c<1, a+b+c=1), LiNi_{1-y}Co_{y}O₂, LiCo_{1-y}Mn_{y}O₂, LiNi_{1-y}Mn_{y}O₂(0≤y<1), Li (NiₐCo_{b}Mn_{c})O₄(0<a<2, 0<b<2, 0<c<2, a+b+c=2), LiMn_{2-z}Ni_{z}O₄, LiMn_{2-z}Co_{z}O₄(0<z<2), LiCoPO₄ and LiFePO₄, or a mixture of two or more of them can be used. In addition, sulfides, selenides and halides may also be used, in addition to these oxides.

The positive electrode active material comprises sulfur compounds, and the sulfur compound may be at least one selected from the group consisting of elemental sulfur (S₈), an organic sulfur compound (Li₂Sₙ(n≥1)) and a carbon-sulfur polymer ((C₂Sₓ)ₙ: x=2.5 ~ 50, n≥2). Preferably, the positive electrode active material may be inorganic sulfur (S₈).

As the positive electrode active material includes a sulfur compound, the lithium secondary battery of the present invention may be a lithium-sulfur battery.

Sulfur contained in the positive electrode active material is used in combination with a conductive material such as a carbon material because it does not have electrical conductivity alone. Accordingly, sulfur is comprised in the form of a sulfur-carbon composite, and preferably, the positive electrode active material may be a sulfur-carbon composite.

The carbon contained in the sulfur-carbon composite is a porous carbon material and provides a framework capable of uniformly and stably immobilizing sulfur and compensates for the low electrical conductivity of sulfur so that the electrochemical reaction can be proceeded smoothly.

The porous carbon material can be generally produced by carbonizing precursors of various carbon materials. The porous carbon material may comprise uneven pores therein, the average diameter of the pores is in the range of 1 to 200 nm, and the porosity may be in the range of 10 to 90 % of the total volume of the porous carbon material. If the average diameter of the pores and the porosity are less than the above ranges, the pore size is only at the molecular level, and impregnation with sulfur is impossible. On the contrary, if the average diameter of the pores and the porosity exceed the above ranges, the mechanical strength of the porous carbon is weakened, which is not preferable for application to the manufacturing process of the electrode.

The shape of the porous carbon material is in the form of sphere, rod, needle, plate, tube, or bulk, and can be used without limitation as long as it is commonly used in a lithium secondary battery.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); graphite such as natural graphite, artificial graphite, expanded graphite; and activated carbon.

The method for preparing the sulfur-carbon composite is not particularly limited in the present invention, and a method commonly used in the art may be used.

The positive electrode may further comprise one or more additives, in addition to the positive electrode active material, selected from transition metal elements, group IIIA elements, group IVA elements, sulfur compounds of these elements, and alloys of these elements with sulfur.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg and the like, and the group IIIA element may comprise Al, Ga, In, Tl and the like, and the group IVA element may comprise Ge, Sn, Pb, and the like.

The electrically conductive material is a material that acts as a path, through which electrons are transferred from the current collector to the positive electrode active material, by electrically connecting the electrolyte solution and the positive electrode active material. The electrically conductive material can be used without limitation as long as it has electrical conductivity.

For example, as the electrically conductive material, graphite such as natural graphite or artificial graphite; carbon blacks such as Super-P, Denka black, acetylene black, Ketjen black, channel black, furnace black, lamp black, and thermal black; carbon derivatives such as carbon nanotubes and fullerenes; electrically conductive fibers such as carbon fibers and metal fibers; carbon fluoride; metal powders such as aluminum and nickel powder; or electrically conductive polymers such as polyaniline, polythiophene, polyacetylene, and polypyrrole may be used alone or in combination.

The binder maintains the positive electrode active material in the positive electrode current collector, and organically connects the positive electrode active materials to increase the bonding force between them, and any binder known in the art may be used.

For example, the binder may be any one selected from fluororesin-based binders comprising polyvinylidene fluoride (PVdF) or polytetrafluoroethylene (PTFE); rubber-based binders comprising styrene butadiene rubber (SBR), acrylonitrile-butadiene rubber, and styrene-isoprene rubber; cellulose-based binders comprising carboxymethylcellulose (CMC), starch, hydroxy propyl cellulose, and regenerated cellulose; polyalcohol-based binders comprising polyvinyl alcohol (PVA); polyacrylic binder comprising polyacrylic acid (PAA); polyolefin-based binders comprising polyethylene and polypropylene; polyimide-based binders; polyester-based binders; and silane-based binders, or mixtures or copolymers of two or more thereof.

The method of manufacturing the positive electrode is not particularly limited in the present invention, and a method commonly used in the art may be used. As an example, the positive electrode may be manufactured by preparing a slurry composition for a positive electrode, and then applying the slurry composition to at least one surface of the positive electrode current collector.

The slurry composition for a positive electrode comprises the positive electrode active material, an electrically conductive material, and a binder as described above, and may further comprise a solvent other than the above.

As the solvent, one capable of uniformly dispersing a positive electrode active material, an electrically conductive material, and a binder is used. Such a solvent is an aqueous solvent, and water is most preferred, and in this case, water may be distilled water or de-ionized water. However, it is not necessarily limited thereto, and if necessary, a lower alcohol that can be easily mixed with water may be used. Examples of the lower alcohol comprise methanol, ethanol, propanol, isopropanol, and butanol, and preferably, they may be used in combination with water.

The loading amount of sulfur in the positive electrode may be 1 to 10 mAh/cm², and preferably 1 to 6 mAh/cm².

The negative electrode may comprise a negative electrode current collector and a negative electrode active material layer coated on one or both surfaces of the negative electrode current collector. Alternatively, the negative electrode may be a lithium metal plate.

The negative electrode current collector is for supporting the negative electrode active material layer, and is not particularly limited as long as it has high conductivity without causing chemical changes in the battery, and may be selected from the group consisting of copper, aluminum, stainless steel, zinc, titanium, silver, palladium, nickel, iron, chromium, and alloys and combinations thereof. The stainless steel can be surface-treated with carbon, nickel, titanium, or silver, and the alloy may be an aluminum-cadmium alloy. In addition to those, sintered carbon, a non-conductive polymer surface-treated with an electrically conductive material, or an electrically conductive polymer may be used. Generally, a thin copper plate is used as the negative electrode current collector.

In addition, the shape of the negative electrode current collector can be various forms such as a film having or not having fine irregularities on a surface, sheet, foil, net, porous body, foam, nonwoven fabric and the like.

The negative electrode active material layer may comprise an electrically conductive material, a binder, etc. in addition to the negative electrode active material. At this time, the electrically conductive material and the binder are as described above.

The negative electrode active material may comprise a material capable of reversibly intercalating or deintercalating lithium ion (Li⁺), a material capable of reacting with lithium ion to reversibly form lithium containing compounds, lithium metal, or lithium alloy.

The material capable of reversibly intercalating or deintercalating lithium ion (Li⁺) can be, for example, crystalline carbon, amorphous carbon, or a mixture thereof. The material capable of reacting with lithium ion (Li⁺) to reversibly form lithium containing compounds may be, for example, tin oxide, titanium nitrate, or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or a lithium metal powder.

The method of forming the negative electrode active material is not particularly limited, and a method of forming a layer or film commonly used in the art may be used. For example, methods such as compression, coating, and deposition may be used. In addition, a case, in which a thin film of metallic lithium is formed on a metal plate by initial charging after assembling a battery without a lithium thin film in the current collector, is also comprised in the negative electrode of the present invention.

The electrolyte solution is for causing an electrochemical oxidation or reduction reaction in the positive electrode and the negative electrode through it, and is as described above.

The injection of the electrolyte may be performed at an appropriate step in the manufacturing process of a lithium secondary battery depending on the manufacturing process and required physical properties of the final product. That is, it can be applied before assembling the lithium secondary battery or in the final stage of assembling.

A conventional separator may be interposed between the positive electrode and the negative electrode. The separator is a physical separator having a function of physically separating the electrodes, and can be used without particular limitation as long as it is used as a conventional separator, and particularly, a separator with low resistance to ion migration in the electrolyte solution and excellent impregnating ability for the electrolyte solution is preferable.

In addition, the separator may be made of a porous, nonconductive, or insulating material which enables the transport of lithium ions between the positive electrode and the negative electrode while separating or insulating the positive electrode and the negative electrode from each other. The separator can be used without any particular limitation as long as it is normally used as a separator in a lithium secondary battery. The separator may be an independent member such as a film or a coating layer added to the positive electrode and/or the negative electrode.

The separator may be made of a porous substrate. Any of the porous substrates can be used as long as it is a porous substrate commonly used in a lithium secondary battery. A porous polymer film may be used alone or in the form of a laminate. For example, a non-woven fabric made of high melting point glass fibers, or polyethylene terephthalate fibers, etc. or a polyolefin-based porous membrane may be used, but is not limited thereto.

The material of the porous substrate is not particularly limited in the present invention, and any material can be used as long as it is a porous substrate commonly used in a lithium secondary battery. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenylene oxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole, and polyarylate.

The thickness of the porous substrate is not particularly limited, but may be 1 to 100 *µ*m, and preferably 5 to 50 *µ*m. Although the thickness range of the porous substrate is not particularly limited to the above-mentioned range, if the thickness is excessively thinner than the lower limit described above, mechanical properties are deteriorated and thus the separator may be easily damaged during use of the battery.

The average size and porosity of the pores present in the porous substrate are also not particularly limited, and may be 0.1 *µ*m to 50 *µ*m and 10 to 95%, respectively.

In the case of the lithium secondary battery according to the present invention, it is possible to perform laminating or stacking and folding processes of the separator and the electrode, in addition to the winding process which is a general process.

The shape of the lithium secondary battery is not particularly limited, and may have various shapes such as a cylindrical type, a stacked type, and a coin type.

Hereinafter, preferred examples of the present invention will be described in order to facilitate understanding of the present invention. However, the following examples are provided for better understanding of the present invention, and the present invention is not limited thereto.

### Example: Manufacture of lithium-sulfur battery

### Preparation of electrolyte solution for lithium-sulfur battery: Preparation Examples 1 to 7

### [Preparation Example 1]

1,3-dioxolane and 1,2-dimethoxyethane as an organic solvent were mixed in a volume ratio (v/v) of 1:1, and methyl trifluoroacetate of 0.005 % by weight as an additive was added, and then 1M lithium bis(trifluoromethanesulfonyl)imide (LiTFSI) and LiNO₃ of 1 % by weight were dissolved to prepare an electrolyte solution for a lithium-sulfur battery.

### [Preparation Examples 2 to 7]

Electrolyte solutions for the lithium-sulfur battery were prepared in the same manner as in Preparation Example 1, except that the addition weight ratio of methyl trifluoro acetate as an additive was changed as shown in Table 1 below.

**Table 1:**

| | Additive type | Weight ratio (% by weight relative to total weight of electrolyte solution) |
|---|---|---|
| Preparation Example 1 | Methyl trifluoroacetate | 0.005 |
| Preparation Example 2 | | 0.1 |
| Preparation Example | | 0.5 |
| 3 | | |
| Preparation Example 4 | | 0.7 |
| Preparation Example 5 | | 0.9 |
| Preparation Example 6 | | 1.0 |
| Preparation Example 7 | | - |

### Manufacture of lithium-sulfur battery: Examples 1 to 6 and Comparative Examples 1

### [Reference Example 1]

Water was used as a solvent, and a sulfur-carbon composite as a positive electrode active material, an electrically conductive material, and a binder were mixed in a ratio of 87.5:5:7.5 to prepare a slurry of the positive electrode active material. At this time, the sulfur-carbon composite was prepared by mixing sulfur and carbon nanotubes (CNT) in a weight ratio of 75:25. In addition, Denka black was used as an electrically conductive material, and styrenebutadiene rubber/carboxymethyl cellulose (SBR:CMC=70:30, weight ratio) was used as a binder to prepare a slurry composition of the positive electrode active material.

The slurry of the positive electrode active material was applied to one surface of an aluminum current collector, dried at 100 °C and then rolled to prepare a positive electrode having a porosity of 68 % and a loading amount of 5.6 mAh/cm².

Lithium metal having a thickness of 45 µm was used as the negative electrode.

The prepared positive electrode and the negative electrode were positioned to face each other, and then a polyethylene separator having a thickness of 16 µm and a porosity of 45% was interposed between the positive electrode and the negative electrode to manufacture an electrode assembly. Thereafter, the electrode assembly was placed inside the case, and then, the electrolyte solution for the lithium secondary battery of Preparation Example 1 above was injected into the case to manufacture a lithium-sulfur battery.

### [Examples 2 to 4 and Reference Examples 5&6]

Lithium-sulfur batteries were manufactured in the same manner as in Reference Example 1, except that the electrolyte solutions of Preparation Examples 2 to 6 were used as an electrolyte solution for a lithium secondary battery.

### [Comparative Example 1]

A lithium-sulfur battery was prepared in the same manner as in Reference Example 1, except that the electrolyte solution of Preparation Example 7 was used as an electrolyte solution for a lithium secondary battery.

**Table 2:**

| | Electrolyte solution used |
|---|---|
| Reference Example 1 | Preparation Example 1 |
| Example 2 | Preparation Example 2 |
| Example 3 | Preparation Example 3 |
| Example 4 | Preparation Example 4 |
| Reference Example 5 | Preparation Example 5 |
| Reference Example 6 | Preparation Example 6 |
| Comparative Example 1 | Preparation Example 7 |

### Experimental Example 1: Evaluation of lifetime characteristics of battery

For the lithium-sulfur batteries prepared in (Reference) Examples 1 to 6 and Comparative Example 1 above, the lifetime characteristics of the batteries were evaluated through repeated charging/discharging cycles. The results of the evaluation are shown in Table 3 below and FIG. 1.

Specifically, for the lithium-sulfur batteries, discharging to 1.8V at 0.1C and charging to 2.5V at 0.1C in CC mode were repeated twice under the operating temperature condition of the battery of 25°C, and then charging and discharging at 0.2C were repeated once, and 0.3C charging/0.5C discharging was repeated up to 200 cycles to evaluate the lifetime characteristics of the batteries.

In the evaluation of the lifetime characteristics of the batteries, the ratio (%) of the discharging capacity in the corresponding cycle compared to the discharging capacity in the cycle starting 0.3C charging/0.5C discharging is defined as retention, and the result is shown in FIG. 1. In addition, in order to evaluate the lifetime, the number of cycles when retention (%) was 80% is shown in Table 3 below.

**Table 3:**

| | Number of cycles to reach 80% retention (Cycle) |
|---|---|
| Reference Example 1 | 85 |
| Example 2 | 158 |
| Example 3 | 126 |
| Example 4 | 110 |
| Reference Example 5 | 73 |
| Reference Example 6 | 51 |
| Comparative Example 1 | 71 |

Through the results of Table 3 above and FIG. 1, it was confirmed that in the case of lithium-sulfur batteries containing alkyl trifluoroacetate in a weight ratio within a certain range as an additive of the electrolyte solution, they have excellent lifetime characteristics that a high retention rate of the capacity was maintained even when cycles are repeated.

Specifically, it was found that as in Examples 2 to 4, when an alkyl trifluoroacetate of 0.01 to 0.8 % by weight relative to the total weight of the electrolyte solution was added as an additive to the electrolyte solution, efficient peeling (stripping)/depositing (plating) process was proceeded on the surface of the lithium negative electrode, and thus 80 % retention was reached after reaching at least 110 cycles.

On the other hand, it was confirmed that as in Comparative Example 1, in the case of a lithium-sulfur battery that does not contain any additive of alkyl trifluoroacetate in the electrolyte solution, 80% retention has already been reached before 71 cycles, so the capacity retention rate was relatively low. In addition, it was confirmed that even when alkyl trifluoroacetate was added to the electrolyte solution, in the case of Reference Example 6 where the addition amount exceeds 0.9 % by weight, 80 % retention has already been reached before 51 cycles, and thus the capacity retention rate according to charging and discharging was significantly lowered.

In particular, it was confirmed that in the case of Example 2 containing alkyl trifluoroacetate as an additive in an amount of 0.01 to 0.4 % by weight, it reaches 80% retention only after reaching 158 cycles, and thus has remarkably excellent lifetime characteristics.

### Experimental Example 2: Measurement of ¹H-NMR spectrum

In order to check whether alkyl trifluoroacetate, which is the compound represented by Formula 1, was contained in the electrolyte solution for the lithium-sulfur batteries prepared through Examples 1 to 6 and Comparative Example 1, ¹H-NMR (300MHz, CDCl₃, standard substance TMS) spectrum was measured.

**Table 4:**

| | ¹H-NMR (300MHz, CDCl₃, standard substance TMS) |
|---|---|
| (Reference) Example 1 to 6 | 3.95~4.00(m, 3H) |
| Comparative Example 1 | - |

Through the ¹H-NMR peak of Table 4 above, it was confirmed that the electrolyte solutions for the lithium-sulfur battery of (Reference) Examples 1 to 6 contained methyl trifluoroacetate as an additive.

On the other hand, it was confirmed that since the ¹H-NMR spectrum of Comparative Example 1 did not show the ¹H-NMR peak, the electrolyte solution for the lithium-sulfur battery did not contain an additive of methyl trifluoroacetate.

## Claims

1. An electrolyte solution for a lithium secondary battery comprising a lithium salt, an organic solvent and an additive, wherein the additive comprises a compound represented by Formula 1 below: 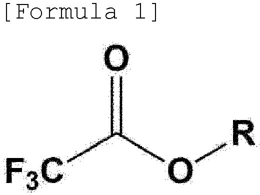
wherein, R is a substituted or unsubstituted C1 to C60 alkyl group,
wherein the electrolyte solution for the lithium secondary battery comprises the compound represented by the above Formula 1 in an amount of 0.01 to 0.8 % by weight relative to the total weight of the electrolyte solution.

2. The electrolyte solution for the lithium secondary battery according to claim 1, wherein the R is selected from the group consisting of a methyl group; an ethyl group; a n-propyl group; an isopropyl group; a n-butyl group; an isobutyl group; a tert-butyl group; a sec-butyl group; a 1-methyl-butyl group; a 1-ethyl-butyl group; a n-pentyl group; an isopentyl group; a neopentyl group; a tert-pentyl group; a n-hexyl group; a 1-methylpentyl group; a 2-methylpentyl group; 4-methyl-2-pentyl group; a 3,3-dimethylbutyl group; and a 2-ethylbutyl group.

3. The electrolyte solution for the lithium secondary battery according to claim 1, wherein the R is selected from the group consisting of a methyl group; an ethyl group; a n-propyl group; an isopropyl group; a n-butyl group; an isobutyl group; a tert-butyl group; and a sec-butyl group.

4. The electrolyte solution for the lithium secondary battery according to claim 1, wherein the electrolyte solution for the lithium secondary battery comprises the compound represented by the above Formula 1 in an amount of 0.01 to 0.4 % by weight relative to the total weight of the electrolyte solution.

5. The electrolyte solution for the lithium secondary battery according to claim 1, wherein the compound represented by Formula 1 is methyl trifluoroacetate, and the electrolyte solution for the lithium secondary battery comprises the compound represented by Formula 1 in an amount of 0.01 to 0.8 % by weight relative to the total weight of the electrolyte solution.

6. The electrolyte solution for the lithium secondary battery according to claim 1, wherein the compound represented by Formula 1 is methyl trifluoroacetate, and singlet in the range of 3.95 ppm to 4.00 ppm appears in the ¹H-NMR (300 MHz, CDCl₃, standard substance TMS) spectrum of the compound represented by Formula 1.

7. The electrolyte solution for the lithium secondary battery according to claim 1, wherein the compound represented by Formula 1 is ethyl trifluoroacetate, and triplet in the range of 1.31 ppm to 1.50 ppm and quartet in the range of 4.25 ppm to 4.55 ppm appear in the ¹H-NMR (300 MHz, CDCl₃, standard substance TMS) spectrum of the compound represented by Formula 1.

8. The electrolyte solution for the lithium secondary battery according to claim 1, wherein the electrolyte solution for the lithium secondary battery is an electrolyte solution for a lithium-sulfur battery.

9. A lithium secondary battery comprising:
a positive electrode;
a negative electrode;
a separator interposed between the positive electrode and the negative electrode; and
the electrolyte solution of any one of claims 1 to 8.

10. The lithium secondary battery according to claim 9, wherein the lithium secondary battery is a lithium-sulfur battery.

## Patentansprüche

1. Elektrolytlösung für eine Lithium-Sekundärbatterie, umfassend ein Lithiumsalz, ein organisches Lösungsmittel und ein Additiv, wobei das Additiv eine durch die nachstehende Formel 1 dargestellte Verbindung umfasst: 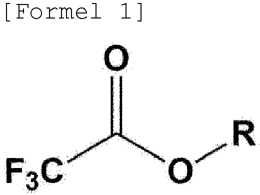
wobei R eine substituierte oder unsubstituierte C1 - bis C60 -Alkylgruppe ist,
wobei die Elektrolytlösung für die Lithium-Sekundärbatterie die durch die vorstehende Formel 1 dargestellte Verbindung in einer Menge von 0,01 bis 0,8 Gew.-%, bezogen auf das Gesamtgewicht der Elektrolytlösung, umfasst.

2. Elektrolytlösung für die Lithium-Sekundärbatterie nach Anspruch 1, wobei das R ausgewählt ist aus der Gruppe bestehend aus einer Methylgruppe; einer Ethylgruppe; einer n-Propylgruppe; einer Isopropylgruppe; einer n-Butylgruppe; einer Isobutylgruppe; einer tert-Butylgruppe; einer sec-Butylgruppe; einer 1-Methylbutylgruppe; einer 1-Ethylbutylgruppe; einer n-Pentylgruppe; einer Isopentylgruppe; einer Neopentylgruppe; einer tert-Pentylgruppe; einer n-Hexylgruppe; einer 1-Methylpentylgruppe; einer 2-Methylpentylgruppe; einer 4-Methyl-2-pentylgruppe; einer 3,3-Dimethylbutylgruppe; und einer 2-Ethylbutylgruppe.

3. Elektrolytlösung für die Lithium-Sekundärbatterie nach Anspruch 1, wobei das R ausgewählt ist aus der Gruppe bestehend aus einer Methylgruppe; einer Ethylgruppe; einer n-Propylgruppe; einer Isopropylgruppe; einer n-Butylgruppe; einer Isobutylgruppe; einer tert-Butylgruppe; und einer sec-Butylgruppe.

4. Elektrolytlösung für die Lithium-Sekundärbatterie nach Anspruch 1, wobei die Elektrolytlösung für die Lithium-Sekundärbatterie die durch die vorstehende Formel 1 dargestellte Verbindung in einer Menge von 0,01 bis 0,4 Gew.-%, bezogen auf das Gesamtgewicht der Elektrolytlösung, umfasst.

5. Elektrolytlösung für die Lithium-Sekundärbatterie nach Anspruch 1, wobei die durch die Formel 1 dargestellte Verbindung Methyltrifluoracetat ist und die Elektrolytlösung für die Lithium-Sekundärbatterie die durch die Formel 1 dargestellte Verbindung in einer Menge von 0,01 bis 0,8 Gew.-%, bezogen auf das Gesamtgewicht der Elektrolytlösung, umfasst.

6. Elektrolytlösung für die Lithium-Sekundärbatterie nach Anspruch 1, wobei die durch die Formel 1 dargestellte Verbindung Methyltrifluoracetat ist und ein Singulett im Bereich von 3,95 ppm bis 4,00 ppm im ¹H-NMR (300 MHz, CDCl₃, Standardsubstanz TMS)-Spektrum der durch die Formel 1 dargestellten Verbindung erscheint.

7. Elektrolytlösung für die Lithium-Sekundärbatterie nach Anspruch 1, wobei die durch die Formel 1 dargestellte Verbindung Ethyltrifluoracetat ist und ein Triplett im Bereich von 1,31 ppm bis 1,50 ppm und ein Quartett im Bereich von 4,25 ppm bis 4,55 ppm im ¹H-NMR (300 MHz, CDCl₃, Standardsubstanz TMS)-Spektrum der durch die Formel 1 dargestellten Verbindung erscheint.

8. Elektrolytlösung für die Lithium-Sekundärbatterie nach Anspruch 1, wobei die Elektrolytlösung für die Lithium-Sekundärbatterie eine Elektrolytlösung für eine Lithium-Schwefel-Batterie ist.

9. Lithium-Sekundärbatterie, umfassend:
eine positive Elektrode;
eine negative Elektrode;
einen Separator, der zwischen der positiven Elektrode und der negativen Elektrode angeordnet ist; und
die Elektrolytlösung nach einem der Ansprüche 1 bis 8.

10. Lithium-Sekundärbatterie nach Anspruch 9, wobei die Lithium-Sekundärbatterie eine Lithium-Schwefel-Batterie ist.

## Revendications

1. Solution électrolytique pour une batterie rechargeable au lithium comprenant un sel de lithium, un solvant organique et un additif, dans laquelle l'additif comprend un composé représenté par la Formule 1 ci-dessous : 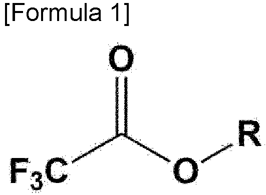
dans laquelle R est un groupe alkyle en C1 à C60 substitué or non substitué,
dans laquelle la solution électrolytique pour la batterie rechargeable au lithium comprend le composé représenté par la Formule 1 ci-dessus dans une quantité de 0,01 à 0,8 % en poids pour le poids total de la solution électrolytique.

2. Solution électrolytique pour la batterie rechargeable au lithium selon la revendication 1, dans laquelle le R est sélectionné dans le groupe constitué d'un groupe méthyle ; un groupe éthyle ; un groupe n-propyle ; un groupe isopropyle ; un groupe n-butyle ; un groupe isobutyle ; un groupe tert-butyle ; un groupe sec-butyle ; un groupe 1-méthyl-butyle ; un groupe 1-éthyl-butyle ; un groupe n-pentyle ; un groupe isopentyle ; un groupe néopentyle ; un groupe tert-pentyle ; un groupe n-hexyle ; un groupe 1-méthylpentyle ; un groupe 2-méthylpentyle ; un groupe 4-méthyl-2-pentyle ; un groupe 3,3-diméthylbutyle ; et un groupe 2-éthylbutyle.

3. Solution électrolytique pour la batterie rechargeable au lithium selon la revendication 1, dans laquelle le R est sélectionné dans le groupe constitué d'un groupe méthyle ; un groupe éthyle ; un groupe n-propyle ; un groupe isopropyle ; un groupe n-butyle ; un groupe isobutyle ; un groupe tert-butyle et un groupe sec-butyle.

4. Solution électrolytique pour la batterie rechargeable au lithium selon la revendication 1, dans laquelle la solution électrolytique pour la batterie rechargeable au lithium comprend le composé représenté par la Formule 1 ci-dessus dans une quantité de 0,01 à 0,4 % en poids pour le poids total de la solution électrolytique.

5. Solution électrolytique pour la batterie rechargeable au lithium selon la revendication 1, dans laquelle le composé représenté par la Formule 1 est le trifluoroacétate de méthyle, et la solution électrolytique pour la batterie rechargeable au lithium comprend le composé représenté par la Formule 1 dans une quantité de 0,01 à 0,8 % en poids pour le poids total de la solution électrolytique.

6. Solution électrolytique pour la batterie rechargeable au lithium selon la revendication 1, dans laquelle le composé représenté par la Formule 1 est le trifluoroacétate de méthyle, et un singulet dans la plage de 3,95 ppm à 4,00 ppm apparaît dans le spectre ¹H-NMR (300 MHz, CDCl₃, substance standard TMS) du composé représenté par la Formule 1,

7. Solution électrolytique pour la batterie rechargeable au lithium selon la revendication 1, dans laquelle le composé représenté par la Formule 1 est le trifluoroacétate d'éthyle, et un triplet dans la plage de 1,31 ppm à 1,50 ppm et un quartet dans la plage de 4,25 ppm à 4,55 ppm apparaissent dans le spectre ¹H-NMR (300 MHz, CDCl₃, substance standard TMS) du composé représenté par la Formule 1,

8. Solution électrolytique pour la batterie rechargeable au lithium selon la revendication 1, dans laquelle la solution électrolytique pour la batterie rechargeable au lithium est une solution électrolytique pour une batterie au lithium-soufre.

9. Batterie rechargeable au lithium, comprenant :
une électrode positive ;
une électrode négative ;
un séparateur interposé entre l'électrode positive et l'électrode négative ; et
la solution électrolytique selon l'une quelconque des revendications 1 à 8.

10. Batterie rechargeable au lithium selon la revendication 9, dans laquelle la batterie rechargeable au lithium est une batterie au lithium-soufre.
